# EUROPEAN PATENT APPLICATION

(11) **EP 4 596 937 A1**
(43) Date of publication of application: **06.08.2025**
(21) Application number: 25155447.3
(22) Date of filing: 01.02.2025
(51) Int. Cl.: F16K 31/04, F16K 37/00

(54) **METHOD FOR SAFEGUARDING A MOTORIZED LINE VALVE**

(30) Priority: 02.02.2024 IT 202400002175
(71) Applicant: I.S.I.F. S.r.l., 52026 Castelfranco Piandiscò (IT); Inrete Distribuzione Energia S.p.A., 40127 Bologna (IT)
(72) Inventor: ODORI, Mauro, 50026 Castelfranco Piandiscò (AR) (IT)
(74) Representative: Ruzzu, Giammario

(57) **Abstract**

The method of the invention concerns the safeguarding of a line valve (Vs), installed at a pipe (T) for the transport of a fluid and comprising a gearmotor unit (2), provided for its operation. The latter is equipped with a motor (21) and a reduction device (22), to switch the valve (Vs) on command between operating positions of passage of the flow of said fluid or interruption of the same, totally or partially. The safeguarding method, intended to eliminate or reduce the residual static torque weighing on the chain of motion transmission components, comprises the phases of:
- Check that one of the switching phases has been completed and that the motor has stopped (21);
- Command to reverse the direction of rotation of the motor (21);
- Controlling the motor rotation (21), to eliminate or reduce the residual static torque module weighing on the gearmotor group (2) and on the line valve (Vs);
- Continuous verification of the achievement of an assigned value for an operating parameter, indicative of the current value of the residual torque, and completion of the safeguard operation upon achievement of an assigned value for the same operating parameter, the latter indicative of an acceptable value of the aforementioned residual torque.

## Description

### DESCRIPTION OF THE INVENTION

The present invention fits into the technical sector of networks for the transport and distribution of fluids, both flammable fluids such as gas pipelines, oil pipelines and similar, but also drinking water or water for agricultural uses.

### PLEASE NOTE ABOUT THE INVENTION

The pipelines that form these networks extend for kilometers and branch out in multiple directions, covering even very large territorial extensions.

Along the above-mentioned pipelines, line valves are located, preferably of the ball type, to section off certain parts of the corresponding network and/or to stop the flow of fluid downstream of a certain point, for example for maintenance work.

In many cases, the pipelines of a transport or distribution network are located below ground level, and each line valve is accessible from a relative inspection manhole, closed for example by a manhole lid.

The above ball valves are sized proportionate to the diameter of the associated piping, usually between four and sixteen inches; each valve is equipped with a control shaft, fixed to the relative sphere, extended upwards and contained in a cylindrical sleeve made integral with the fixed body of the valve itself.

The tree has the upper head suitable for being engaged for the rotation, usually of about 90°, which is used to pass the valve from the open position to the closed one, and vice versa.

In normal operating conditions of the respective fluid distribution network, the line valves are in the open position and this condition can persist for very long periods of time, several months or even years. The valves of the main pipelines, which supply a large number of users and which require the continuous supply of the conveyed product, are in fact closed almost exclusively for emergency reasons, due to breakages in the line or particularly important maintenance interventions.

This long immobility of the valves very often leads to their blocking, due to encrustations, deposits of impurities transported together with the fluid or layers of oxide that affect the sliding surfaces in contact with each other; to avoid this, the companies that manage the distribution networks have been required to carry out a mandatory periodic movement cycle, usually at least once or twice a year.

To carry out the above cycle, and maintain the correct maneuverability of the valves, one or more workers are periodically sent to inspect each valve and maneuver it to obtain a partial closure and then, after a short time, a new complete reopening. These operations are added to a series of installation, repair and maintenance operations that the transport line workers must carry out in their work routine; considering the high number of line valves installed in a common distribution network, they involve a significant increase in the commitment, both in terms of man-hours and economic, that the network management companies must sustain.

To avoid the inconvenience and expense of sending personnel on site, each valve is often equipped with a motorized actuation device, which can usually be activated remotely as well as locally by an operator.

The same Applicant, in this regard, has filed on 9 November 2021 the international PCT patent application published under No. WO2022/097118A1, having as its object a "System for the automatic operation of line valves located in fluid distribution networks".

The system can be applied to any line valve equipped with a gearmotor group, capable of moving the relative rotary control in one direction or the other.

The gearmotor assembly comprises an electric motor, preferably but not necessarily of the stepper type, to be able to precisely control its position and rotation increments, connected at the output to a speed reduction device, which is mechanically connected to a valve control shaft.

The gearmotor group is associated with one or more sensor organs that detect and quantify the rotation imparted to the rotation command, and send the data to an electronic processing and control unit, which activates/deactivates said gearmotor group, according to a program for maintaining the function of the line valve, which provides for a partial closure and subsequent immediate reopening at predefined time intervals. By means of a transceiver apparatus, this electronic processing and control unit subsequently sends a report regarding the outcome of the maneuver performed to a remote operations center. The system also provides, in each station in which a valve is installed, a module for the power supply consisting of a photovoltaic panel, a battery charger and an accumulator, so as not to require connection to an electrical line.

### TECHNICAL PROBLEM ADDRESSED BY THE INVENTION

A drawback inherent in motorized systems for operating line valves arises from that to move a valve, such as a ball valve, it is necessary to exert a mechanical action of a rotary type on the operating shaft and on the ball, and overcome the resistance of these due to their inertia and the friction that is inevitably created between the surfaces in contact. To move the valve it is therefore necessary to apply to the operating shaft a torque whose module depends both on the overall mass of the elements to be moved, and therefore on the size of the valve, and on the friction from rubbing to which the ball is subjected during rotation.

Frictions certainly become the predominant factor of resistance to rotation, especially if the valve has been installed for a long time, on the contact surfaces and on any gaskets there are deposits or encrustations of material carried by the flow of the fluid transported by the line, or some parts of the contact surfaces are oxidized. It follows that the torque necessary to move the valve can be quite high, of the order of at least some dozen Nm (Newton x meters). For this reason, larger valves are usually supplied already equipped with a reduction unit, which allows for a reduction in the torque to be supplied to move the valve. In this case, the reduction unit is placed between the operating shaft and the reduction device of the motorized drive system.

The motor of the gearmotor drive unit moves the valve by applying the necessary torque and, once the final position - open, half-open or closed - is reached, it is instantly blocked to keep the valve in that position.

This means that, once the engine has stopped and the valve is in the set position, a static stress remains along the entire chain of components transmitting motion to the valve ball, which keeps the components of the transmission chain itself under tension, and which is substantially equal to the torque required to overcome the inertial and frictional resistances and allow the ball to rotate.

As previously mentioned, this stress can also be quite high for large valves and/or valves with deposits, encrustations or oxide layers that oppose the free rotation of the ball. The presence of the stresses described above for long periods is a source of mechanical stress for all the components of the motion transmission chain, as well as for the ball itself. For components installed for several years, or that have undetected structural defects, this can cause or accentuate the onset of structural or functional problems to the point of compromising their operation. The replacement or repair of the valve and the gearmotor unit therefore requires the intervention, often complex and expensive, of specially organized and equipped maintenance teams.

### OBJECTS OF THE INVENTION

The main object of the present invention is to provide a method for the safeguarding of a motorized line valve capable of avoiding the permanence of mechanical stresses subsequent to the actuation of the valve itself in the motion transmission chain towards the latter, and consequently of prolonging its operating life and the intervals between repair or replacement interventions.

Another object of the invention is to obtain the above-mentioned technical result without the need for any additional components, nor any increase in installation and maintenance costs.

A further object is to obtain the above mentioned technical result in a completely automatic way, or in any case without requiring the presence or work of specialized personnel.

### SUMMARY OF THE INVENTION

These and other objects are fully achieved by a method for the safeguarding of a line valve, installed in correspondence with a pipeline for the transport of a fluid and comprising a gearmotor group, provided for its operation. The latter is equipped with a motor and a reduction device, to switch on command the valve between operating positions of passage of the flow of said fluid or interruption of the same, totally or partially. The safeguarding method, intended to eliminate or reduce the residual static torque weighing on the chain of components of the motion transmission, comprises the phases of:
- Check that one of the switching phases has been completed and that the engine has stopped;
- Command to reverse the direction of rotation of the motor;
- Controlling the motor rotation to eliminate or reduce the residual static torque module weighing on the gearmotor group and the line valve;
- Continuous verification of the achievement of an assigned value for an operating parameter, indicative of the current value of the residual torque, and completion of the safeguard operation upon achievement of an assigned value for the same operating parameter, the latter indicative of an acceptable value of the aforementioned residual torque.

### BRIEF DESCRIPTION OF THE DRAWINGS

The features of the invention will be apparent from the following description of a preferred embodiment of the method for safeguarding a motor-driven line valve in accordance with the claims and with the aid of the attached drawing tables, in which:
- Fig. 1 illustrates a schematic side section view of a ball-type line valve and the associated drive gearmotor assembly;
- Fig. 2 illustrates a flow diagram of a first embodiment of the invention;
- Fig. 3 illustrates a flow diagram of a second embodiment of the invention.

### DETAILED DESCRIPTION OF THE INVENTION

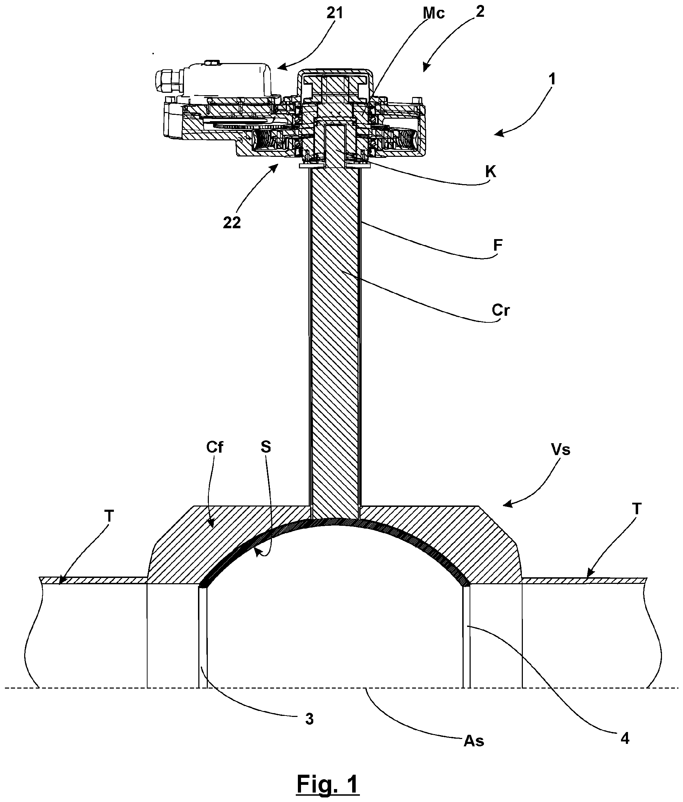

With reference to figure 1, reference 1 indicates the assembly consisting of a line valve Vs and a gearmotor unit 2 for operating it, which constitutes the typical field of application of the safeguard method which is the object of the present invention.

The gearmotor group 2 and the line valve Vs are housed in a special manhole, not illustrated for convenience; the valve Vs is arranged in line with an underground T pipe for the transport of fluids, especially flammable fluids, such as gas, fuel oil and the like. For the purpose of example and not for limitation, as the line valve Vs a ball valve will be considered, which is the most commonly used type of valve. It is understood that the device of the invention may also be advantageously applied to other types of line valve.

The ball valve Vs is equipped with a control shaft Cr, which is fixed to the ball S of said valve Vs and controls its rotation in opening and closing, for an angular excursion of approximately 90°.

The operating shaft Cr extends upwards and is contained in a cylindrical sleeve F, made integral with the fixed body Cf of the same valve Vs; said operating shaft Cr is provided, at the upper end, with a shaped head K intended to mechanically couple, with rotation constraint, with connection means Mc present in the aforementioned gearmotor group 2, which will not be further detailed as they are not useful for understanding the invention.

The sphere S of the valve Vs is internally hollow, and comprises a pair of openings 3,4 aligned with each other according to an axis of symmetry As of the valve Vs itself and, with the valve Vs in the open position as illustrated in Fig. 1, with the longitudinal axis of the pipe T, which substantially coincides with the aforementioned axis of symmetry As.

The gearmotor unit 2 comprises an electric motor 21, which in a preferred embodiment of the invention is of the stepper type, and a speed reduction device 22, intended primarily to increase the torque supplied by the motor 21 to the drive shaft Cr by a factor corresponding to the reduction ratio supplied.

The electric motor 21 is of the commercial type, and is preferably of the type equipped with an electronic controller capable of converting an actuation command into an appropriate number of advancement steps of the motor itself, and of making information available on an interface relating to the number of steps performed, or the current angular position.

Preferably, the controller also has a torque sensor, capable of detecting at any time the torque module required to perform the advancement steps of its rotation and of providing the value, upon request, on the same interface.

The reduction device also allows for more precise control of the rotation of the operating shaft Cr and, consequently, that of the sphere S, since a given rotation angle of the latter corresponds to a greater number of rotation steps of the motor 21, compared to a direct coupling, by a factor equal to the reduction ratio of the reduction device 22.

The operations of the gearmotor group 2 are commanded and controlled by a computerized control unit, not illustrated for simplicity, whose hardware configuration is of a substantially known type, and which will not be further detailed, except to define the functions pertaining to the invention. In the control unit, a computer program operates, according to known methods, provided with procedures suitable for commanding the normal operations of total opening and closing of the valve Vs and, if foreseen, partial opening and closing of the same valve Vs for the purposes of periodic verification of its operation.

According to the invention, the program operating in the control unit also provides a safeguard procedure for the valve Vs, which can be activated manually by an operator or automatically, according to intervals defined by a preset timing. The activation intervals of the safeguard procedure can be, for example, one or more weeks, or one or more months, depending on the environment in which the valve Vs operates, its age of service or the type and purity of the fluid transported by the pipeline T.

In order to always maintain precise control of the operating state of the valve Vs, and to avoid the occurrence of errors in its position which, as already mentioned, could lead to extremely serious consequences, the gearmotor unit 2 comprises detection and sensor means, preferably of a different type, intended to detect the current position of the valve Vs and its direction of rotation during the actuations, and to make the information available to the management program operating in the control unit. Typically, such means may comprise an encoder, optical devices to detect the movement of suitable targets arranged along the chain of motion transmission components, and/or mechanical devices to detect the reaching of significant positions of the valve Vs, typically a fully open position, a partially open position and a fully closed position.

The aforementioned detection and sensor means can also replace the above-mentioned information provided by the torque sensor of the motor controller 21, in the event that this is not of the step-by-step type, or does not have a device for detecting the instantaneous torque applied.

The safeguard method according to the invention applies, preferably but not necessarily, at the conclusion of each opening or closing operation of the valve Vs.

In particular, the safeguard procedure operating in the control unit can be activated immediately after the conclusion of each operation, or it can remain always active and continuously check whether the engine 21, after being activated, stops. In this case it becomes operational immediately afterwards.

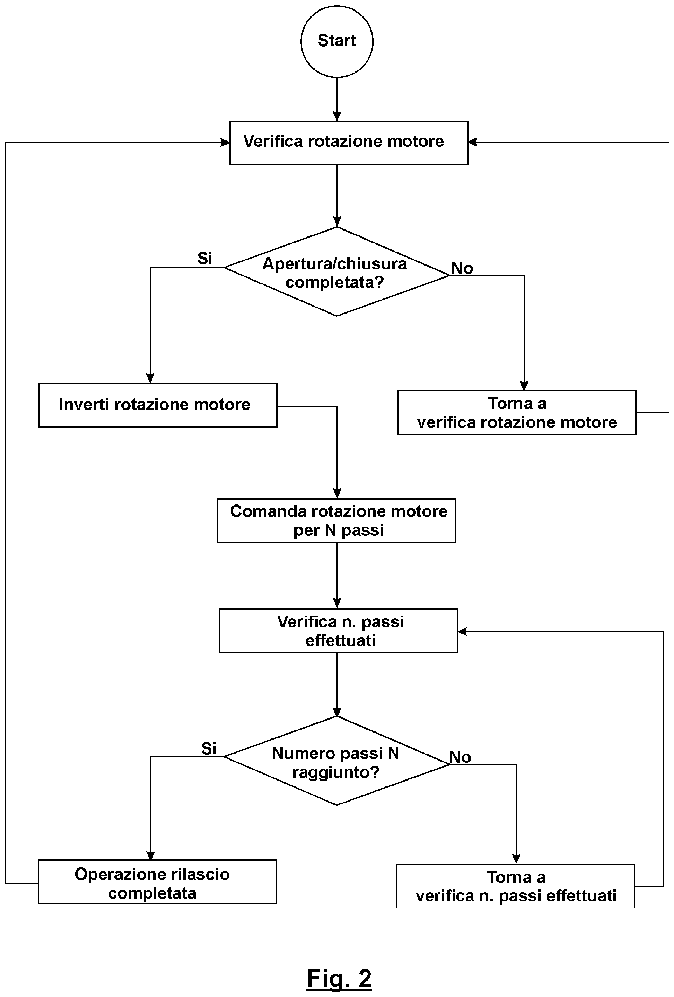

In a first embodiment of the invention, illustrated in figure 2, the method provides that the safeguard procedure, once it has become operational, commands the reversal of the direction of rotation of the motor 21 with respect to the direction of rotation of the operation just concluded.

Subsequently, the procedure commands the motor 21 to perform a preset number N of rotation steps, according to the new direction of rotation. In this case, the number of steps to be performed is preferably defined empirically, depending on the type and operating situation of the valve Vs, as well as the torque required to overcome the resistance of the valve and allow its movement. The preset number of reverse rotation steps is such that, upon completion, substantially all or almost all of the internal tensions due to the residual static torque are discharged.

When the preset number of rotation steps N is reached, the safeguard procedure is deactivated until the next normal opening or closing operation of the valve Vs.

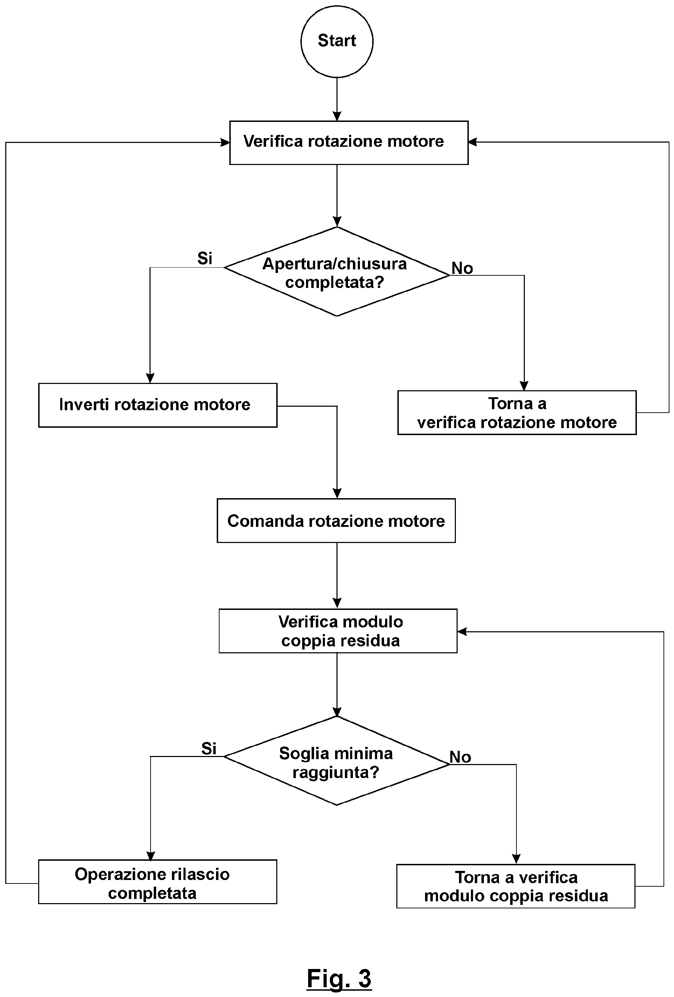

In a second embodiment of the invention, illustrated in figure 3, which provides for the availability of the current torque value supplied by the controller of the motor 21, or by another torque detecting device present in the chain of components transmitting motion to the valve Vs, the activation of the safeguard procedure provides for the command to reverse the direction of rotation of the motor 21 and the execution of a reading of the torque value present at that moment in the motion transmission chain, from the data supplied by the controller of the same motor 21 or by another torque detecting device.

The procedure then commands motor 21 to perform one or more rotation steps, after which a further reading of the residual torque is taken, which will certainly be lower than the previous one.

The above step is repeated until the residual torque value reaches or exceeds a preset minimum value, which can be 0 Nm or close to it.

When the minimum value is reached, the safeguard procedure is deactivated until the next normal opening or closing operation of the Vs valve.

According to a further variant of the method according to the invention, torque detecting means are provided, of a substantially known type, positioned at any point of the aforementioned motion transmission chain.

The safeguard method implemented in the second embodiment described above has the advantage that the result is substantially independent of factors relating to the situation of the ball valve Vs, such as its size and the amount of friction that opposes its movement.

The simple operations described above advantageously allow the tensions to be discharged on the chain of components transmitting motion to the Vs valve and on the Vs valve itself, and help to extend the operating life of all the components of the system.

Furthermore, the safeguard operations are carried out without the need to add new components to the motorized system for moving the Vs valve. The invention therefore allows one to achieve its technical purposes without any increase in costs for the purchase, installation and subsequent maintenance of components and to obtain the same advantages, not only on new installations, but also on motorization systems already installed previously.

It is understood, however, that the above description has an exemplifying and non-limiting value, therefore any variations in detail that may be necessary for technical and/or functional reasons are considered from now to fall within the same protective scope defined by the claims reported below.

## Claims

1. Method for safeguarding a line valve, said valve (Vs) being installed at a pipe (T) for the transport of a fluid and being provided with a control shaft (Cr); a gearmotor unit (2) also being provided for its operation, the latter being provided with at least one motor (21) capable of rotating a chain of transmission components comprising said control shaft (Cr) with the interposition of a reduction device (22), to switch on command said valve (Vs) between operating positions of passage of the flow of said fluid or of interruption of the same, totally or partially; a control unit also being provided to control said switchings by means of a suitable management program; said method being **characterised in that** it comprises the following safeguard operating phases, controlled by at least one safeguard procedure operating in said control unit in the form of a computer program:
- Check that one of the aforementioned switching phases has been completed and that the said engine has stopped (21);
- Command for reversing the direction of rotation of said gearmotor group (2);
- Rotation control of said motor (21) to eliminate or reduce the residual static torque module weighing on the aforementioned gearmotor group (2) and line valve (Vs);
- Continuous verification of the achievement of an assigned value for an operating parameter, indicative of the current value of the aforementioned residual torque, and completion of the safeguard operation upon achievement of an assigned value for said operating parameter, the latter indicative of an acceptable value of said residual torque.

2. Method according to claim 1, **characterised in that** said operating parameter comprises the current value of the static torque present in the aforementioned chain of transmission components, torque detecting means being provided, installed in the aforementioned chain of motion transmission components, and that the assigned value of said operating parameter comprises a zero torque value, or a minimum preset value of the same considered acceptable.

3. Method according to claim 1, **characterised in that** said motor (21) is a stepper motor, said operating parameter comprising the number of rotation steps performed by said motor (21), said phase of verifying the achievement of an assigned value for said operating parameter comprising the detection of the number of rotation steps performed by said motor (21), said assigned value of said operating parameter comprising a preset number of rotation steps (N).

4. Method according to claim 3, **characterised in that** said torque detecting means are included in a controller of said stepper motor (21), said phase of verifying the achievement of an assigned value for said static torque value comprising the reading of said current static torque values from said controller.

5. Method according to claim 2, **characterised in that** said torque detecting means are external to said motor (21), said phase of verifying the achievement of an assigned value for said static torque value comprising the reading of said current static torque values from said external torque detecting means.
